# EUROPEAN PATENT SPECIFICATION

(11) **EP 0 677 423 B1**
(45) Date of publication and mention of the grant of the patent: **01.10.1997**
(21) Application number: 95200949.6
(22) Date of filing: 13.04.1995
(51) Int. Cl.: B60N 2/48

(54) **Neck support for a vehicle seat**
Nackenstütze für Fahrzeugsitze
Soutien du cou pour sièges de véhicules

(30) Priority: 13.04.1994 NL 9400588
(43) Date of publication of application: 18.10.1995
(73) Proprietor: Rasenberg, Johannes Theodorus Marie, NL-4841 CH Prinsenbeek (NL)
(72) Inventor: Rasenberg, Johannes Theodorus Marie, NL-4841 CH Prinsenbeek (NL)
(74) Representative: Bartelds, Erik

(56) References cited:
- WO-A-90/03137
- AU-A- 565 990
- DE-C- 917 836
- DE-U- 8 912 143
- FR-A- 2 688 454
- FR-E- 92 278
- US-A- 3 226 159
- US-A- 5 015 036

## Description

The invention relates to a seat, in particular for use in a vehicle, provided with a seat part, a seat back, a head support, and means arranged between the seat back and the head support for supporting the neck of a user, the neck supporting means comprising at least one pillow body protruding forward at least partially from a principal plane defined by the seat back and the head support. Such a seat is known from FR-A-2 688 454.

This known seat, which is installed in a passenger motor vehicle, comprises a neck cushion made from a supple foam which is arranged in the gap between the headrest and the seat back. The cushion is received in a pocket, which is held in place by a cover placed over the headrest. The neck cushion is height-adjustable by adding or removing a foam insert in the pocket under the cushion. The neck rest is said to be intended for eliminating driver fatigue and for damping a shock on the neck in case of an accident.

Such a neck rest is important since in conventional seats only the head and the back of the user are supported, so that in the case of considerable rearward accelerations the neck of the user will be loaded extra heavily. Considerable rearward accelerations occur for instance when a passenger vehicle is driven into from behind. Such accelerations also occur in the case of frontal collisions when passengers are sitting with their back to the direction of travel such as in the case of trains, busses and aircraft. The heavy loading of the neck can result in a neck injury which, although not fatal, is so serious that important body functions of the victim can thereby be disabled. Such neck injury, known under the collective name of "whiplash", can be accompanied by a translation and hyperextension of the neck vertebrae, damage to the brain-stem and possible occurrence of oedema formation, and in the case of many victims results in practically complete work disability. In addition to the considerable human suffering, the cost to the community is also high.

From US-A-4 744 601 a multi-layer headrest for a vehicle seat is known which comprises a plastically deformable gel layer arranged in front of two or more elastically deformable foam layers. The plastically deformable layer is intended to absorb the repulsive force exerted by the elastic layers trying to resume their original shape. This document does not disclose a neck support bridging the gap between the headrest and the seat back.

Finally, from WO-A-95/05954 a combined headrest and neck support is known, which comprises an inflated air cushion serving as a headrest, which is in communication through a one-way valve with an empty air cushion which is to serve as a neck support. The one-way valve is arranged to open when a predetermined pressure on the headrest is exceeded, as will be the case when a vehicle is hit from the rear, whereby the neck support cushion will be inflated. Due to the valve being a one-way valve, the neck support is not plastically deformable itself.

The invention has for its object to provide a seat of the type described above having an improved neck support. According to the invention this is achieved in that the pillow body is plastically deformable upon impact due to a rearwardly directed acceleration, and is connected to a form-retaining carrier. Due to the presence of these plastically deformable neck supporting means the load resulting from a sudden rearward acceleration is distributed uniformly over the body of the user, whereby the danger of permanent injury is considerably reduced.

Preferred embodiments of the seat according to the invention are described in the dependent claims.

The invention also relates to neck supporting means for use in a vehicle seat as described above, comprising at least one pillow body that is plastically deformable upon impact due to a rearwardly directed acceleration, and is connected to a form-retaining carrier.

The invention is now elucidated on the basis of several embodiments, wherein reference is made to the annexed drawing in which like components are designated with like reference numerals, and wherein:
Figure 1 is a partly cut away perspective view of a conventional vehicle seat;
Figure 2 is a perspective view of neck supporting means which do not form part of the invention;
Figure 3 shows a schematic side view of the seat of figure 1 in combination with the neck supporting means of figure 2 in a vehicle;
Figure 4 is a perspective view with exploded parts of another embodiment of the neck supporting means which does not form part of the invention;
Figure 5 is a view corresponding with figure 2 of yet another embodiment of the neck supporting means which does not form part of the invention;
Figure 6 is a view corresponding with figure 3 of the neck supporting means of figure 5 in use in a vehicle;
Figure 7 is a side view of the upper part of the seat of figure 1 in combination with a first embodiment of the neck supporting means in accordance with the present invention;
Figure 8 is a perspective view in the direction of the arrow VIII in figure 7;
Figure 9 shows a cross sectional view along the line IX-IX in figure 8; and
Figure 10 is a partially cut away perspective view of a seat having a second embodiment of the neck supporting means according to the invention.

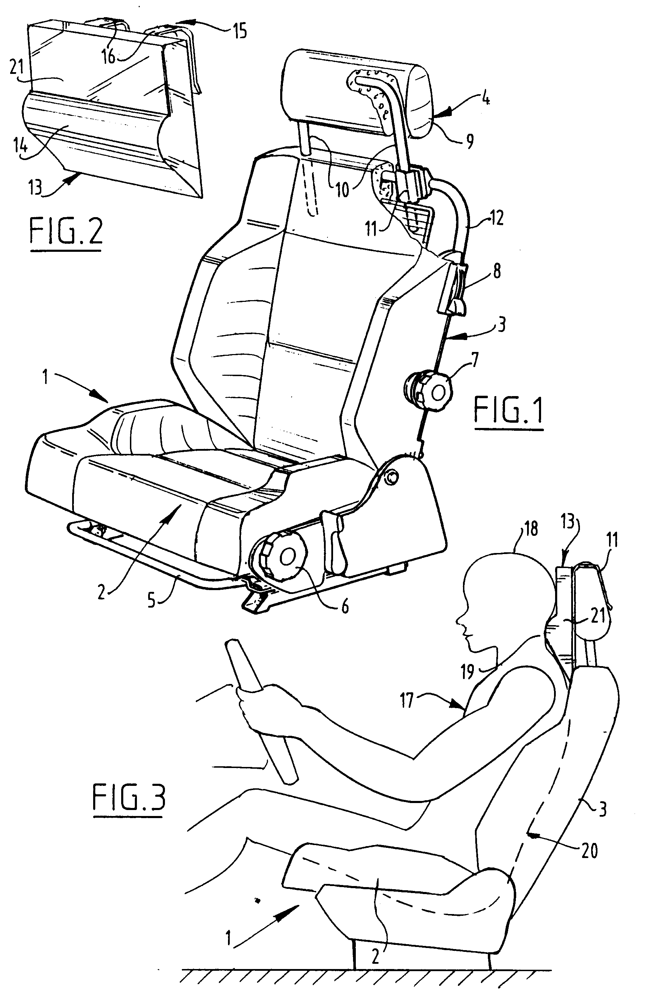

A vehicle seat 1 (figure 1) comprises a seat part 2, a seat back 3 and a head support 4. Seat 1 further comprises a control mechanism 5 for displacing seat 1 in forward and rearward direction in a vehicle, a rotating grip 6 for adjusting the angle between the seat back 3 and the seat part 2, a rotating grip 7 for adjusting the stiffness of the seat back 3 and a locking mechanism 8 which makes it possible to tip forward the seat back 3 or to secure it in the position adjusted with rotating grip 6.

The head support 4 comprises a pillow 9, generally manufactured from a firm plastic foam, which is supported by a frame 10. Frame 10 is clamped height-adjustably in brackets 11 which are fixed to a frame 12 of seat back 3.

The neck supporting means 13 comprise a pillow body 14 and fastening means 15 (figure 2). In the embodiment shown the fastening means are formed by two suspension brackets 16, the shape and size of which are adapted to the shape and size of the head support 4 of seat 1. The placing of fastening means 15 is such that in installed position the neck supporting means 13 are situated between the seat back 3 and the head support 4 of seat 1. The shape of the pillow body 14 is chosen such that in installed position it protrudes at least partially forward outside a principal plane defined by the seat back 3 and head support 4. The contour form of pillow body 14 is chosen such that it corresponds with the neck and shoulder contour of an average user.

As shown in figure 3, the neck supporting means 13 are height-adjustable in relation to the seat part 2 of seat 1 in that they are connected to the height-adjustable head support 4. This combined height adjustment of head support 4 and neck supporting means 13 will in practice enable a satisfactory adjustment for any user 17, as the differences in dimensions of the head 18 and the neck 19 of the majority of users will be smaller than the differences in for instance the length of the back 20.

As further shown in figure 3, the neck supporting means extend in front of head support 4, wherein the upper protruding part 21 of neck supporting means 13, which will generally be manufactured from a deformable, e.g. compressible material, will cushion the head 18 of the user in the case of rearward accelerations and absorb a large part of the acceleration energy so that head injury can also be prevented. (In general the head support 4 is manufactured from a comparatively hard material and the connection of head support 4 onto seat back 3 is such that the average user sits with his head 18 several centimetres in front of the head support 4, whereby the head 18 travels a considerable distance in the case of rearward accelerations before it is cushioned by head support 4).

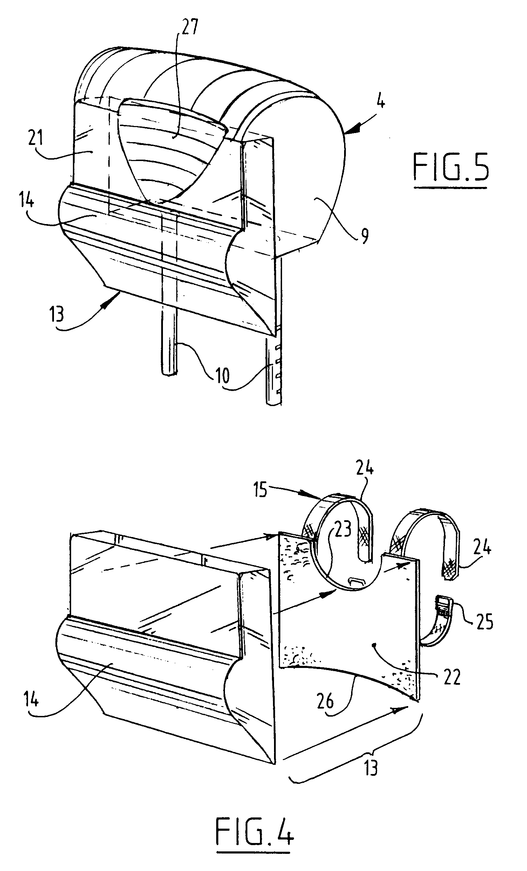

The pillow body 14 will generally be manufactured from an elastic or plastically deformable material, for example a soft foam plastic, and will be connected to a form-retaining carrier 22 (figure 4), for instance a plate manufactured from a stiff plastic such as polyester or from a metal. The pillow body 14, which can be fixed by glueing or in any other suitable manner to carrier 22, functions as energy-absorbing element and thus prevents the neck 19 of the user being exposed to large loads. Carrier 22 comprises an upper recess 23, whereby in the case of rearward acceleration the head of the user can move as far as the head support and in the embodiment shown is further provided with fastening means 15 in the form of fastening straps 24 which can be wrapped completely round the head support 4 of a seat 1. The straps 24 are each provided with an adjustable closure 25, for instance in the form of a buckle or a strip of velcro tape, whereby the neck supporting means 13 can be adjusted in the height not only with the head support 4 relative to the seat part 2 but also separately relative to the head support 4. In order to increase the comfort of the user the shape of the stiff carrier 22 is adapted to the shape of the body of the user 17. The bottom edge 26 in particular of carrier 22 is cut out in concave manner, whereby it does not come into contact with the shoulders and back of the user 17.

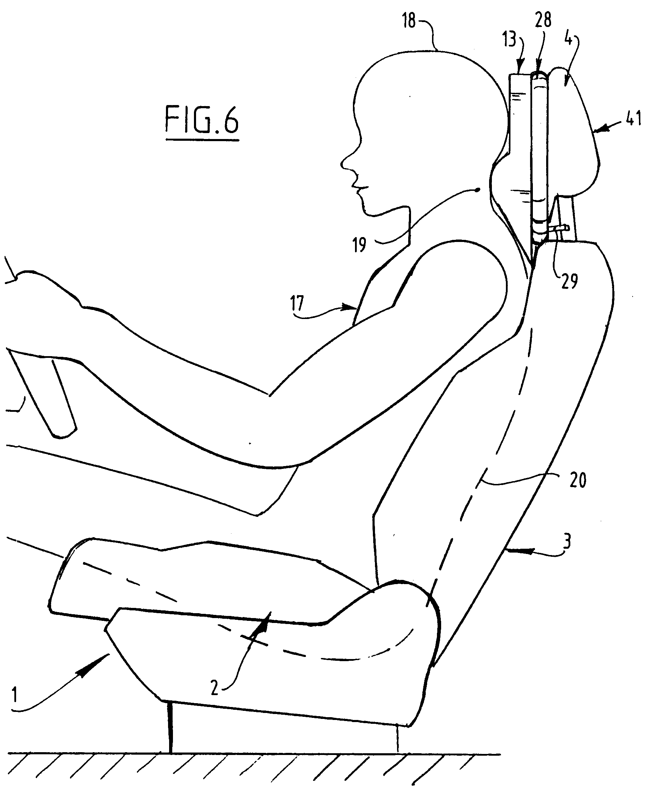

The two non-inventive embodiments of the neck supporting means 13 shown up to this point are particularly suitable for use in combination with seats 1 already present in a vehicle. It is however also possible in newly produced seats to form the neck supporting means 13 as one integral part 41 with the head support 4 (figure 5). As shown, a recess 27 supporting the head 18 of the user during normal use can herein be arranged in the neck supporting means 13 and the head support 4. In addition, it is of course possible that the neck supporting means 13 are also profiled and have a recess whereby the neck 19 of the user is as it were enclosed by the neck supporting means 13.

In order to further increase the convenience and comfort of the neck supporting means 13, the shape of the pillow body 14 can be adjustable. For this purpose the pillow body 14 can comprise one or more inflatable elements 28 (figure 6). When for instance a single inflatable element 28 is present extending over the whole width of pillow body 14 and is connected via a line 29 to a pump (not shown), the thickness of pillow body 14 can be varied, which ensures that the neck supporting means 13 provide optimum support to the neck 19 of the user 17 in any conceivable driving posture of user 17. When a number of inflatable elements 28 are present it is also conceivable for the contour form of the neck supporting means 13 to be precisely adjusted to the body shape of the user 17. The or each inflatable elements 28 could be provided with a pressure relief valve, through which air may escape from the inflatable elements 28 when a predetermined external load is applied thereto, for instance by the head 18 and the neck 19 of the user hitting the inflatable elements due to a rearward acceleration. It is further of course conceivable that the inflatable element 28 functions as a so-called "air bag", and is only inflated when it is subjected to a rearward acceleration of a given magnitude.

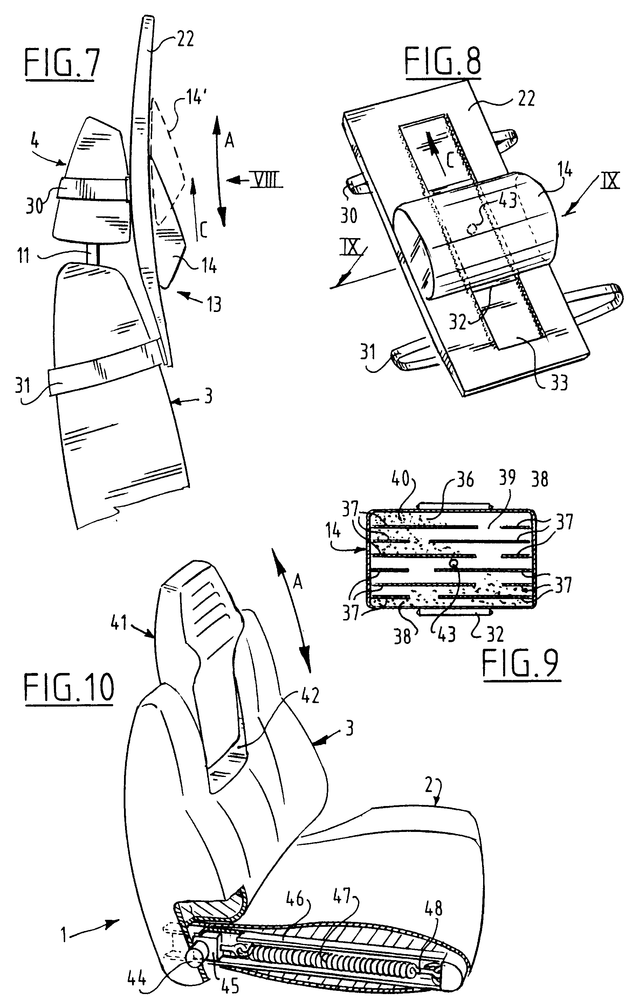

Instead of an elastically deformable pillow body 14 as shown in the previous embodiments, according to the present invention a plastically deformable pillow body 14 is used (fig. 7). The pillow body 14 may be filled for instance with a particulate or granular material, and be slidable in the direction A along a plate 22, which may be fixed to the head support 4 and seat back 3 of the seat 1 by means of straps 30, 31. The plate 22 comprises a guide groove 33, in which a carriage 32 is slidable, to which the pillow body 14 is fixed (fig. 8). Ratchet teeth 35 are arranged along the edges of the groove 33 while the carriage 32 comprises a gear 34 on both sides, as well as a spring (not shown) at its underside. The gear 34 and the ratchet teeth 35 are forced into mutual engagement by the spring force. By pressing the pillow body 14 towards the plate 22 the gear 34 and the ratchet teeth 35 are disengaged against the spring force, whereby the pillow body 14 may be slid to a desired height along the plate 22, where it is held by the engaging teeth 34, 35. The engagement force between the teeth 34,35, which is determined by the spring force, is chosen such that in case of a rearwardly directed accelaration the pillow body 14 can slide upwards with the back 20 and the neck 19 of the user in the direction of the arrow C to for instance the position 14'. Thus, injury due to compression of the vertebral column may be prevented. Instead of teeth 34,35 engaging each other through spring force, any other suitable adjustable fixing mechanism (for instance based on friction) may of course be used.

In this embodiment of the neck support means a rearwardly directed accelaration is further cushioned by the plastic deformation of the pillow body 14. In the embodiment shown, this plastic deformation is due to displacement of the granular filling 40 in the pillow body 14. To this end the filling 40 only occupies part of the internal volume 36 of the pillow body 14 as determined by a cover 49. The degree of filling of the pillow body 14 depends on the nature and the particle size of the material 40 used for filling, the shape and structure of the pillow body 14 and the intended use, and may be determined by the skilled person by means of experiments or calculations. When the filling comprises plastic grains 40, the degree of filling may be comprised between 50 and 95 percent, preferably between 60 and 90 percent, and more preferably between 70 and 85 percent.

The interior 36 of the pillow body 14 is in this case divided into compartments 38 (fig. 9), to prevent the grains 40 from gathering at one side of the pillow body, for instance under the influence of gravity. The compartments 38 are separated by intermediate walls 37, in which openings 39 are arranged. These intermediate walls 37 may like the cover 49 be manufactured from textile material. The openings 39 are small enough to maintain the particulate or granular filling 40 in the compartments 37, but large enough to allow a swift displacement of the filling 40 in case of a sudden depression. The filling material 40 may be loaded into the pillow body 14 through a filler opening 43 extending through the carriage 32. Of course it is also possible to arrange a filler opening in one of the periferal edges of the cover 49, which will generally be made by connecting a front face and a rear face along their periferal edges. It should be noted that the plastically deformable neck support means 13 according to this embodiment have the additional advantage that the shape of the pillow body 14 will automatically adapt to the contour of a part of the body of the user resting thereagainst, due to the free displacement of the filler material 40.

In the embodiment of figure 10 like that of figure 6, the neck support 13 is formed as an integral part 41 with the head support 4. The combined neck and head support 41 is slidably received in a recess 42 in the seat back 3, and as in the previous embodiment it comprises a gear or some other adjustable fixing mechanism. In this embodiment the seat back 3 is not just angularly adjustable but its lower part is also slidably connected to the seat part 2 of the seat 1. A pivot shaft 44 of the angular adjustment mechanism of the seat back 3 is received in a bearing block 45, which is slidable with respect to the frame of the seat part 2 along a rail 46. During normal use of the seat, the bearing block 45 is maintained in its foremost position by a tension spring 47 connected thereto, the end 48 of which is attached to the frame of the seat part 2. In case the seat is subjected to a rearwards acceleration, the lower body of the user will first slide backwards over the seat part 2, and hit the lower part of the seat back 3. Thereby the bearing block 45 is slid backwards along the rail 46 against the biasing force of the spring 47, whereby the upper part of the seat back 3 and the neck and head support 41 fixed thereto is virtually rotated forwards, thus cushioning the upper body and notably the head 18 and neck 19 of the user, which move backwards only later.

Although the invention is described above in relation to the application in motor vehicles, it will be apparent to the skilled person that it is applicable in any situation where people occupying a seat can be subjected to rearward accelerations. Particularly envisaged here are seats facing away from the direction of travel in passenger transport vehicles such as busses, trains and aircraft. Other applications are also conceivable.

## Claims

1. Neck supporting means (13) in a vehicle seat provided with a seat part (2), a seat back (3) and a head support (4), said means (13) (1), comprising at least one pillow body (14) protruding forward at least partially from a principal plane defined by the seat back (3) and the head support (4) of the vehicle seat, **characterised in that** the pillow body is plastically deformable upon impact due to a rearwardly directed acceleration and is connected to a form-retaining carrier (22).

2. Neck supporting means (13) as claimed in claim 1, **characterized in that** the pillow body (14) comprises at least one cover (49) filled at least partially with a particulate or granular material (40).

3. Neck supporting means (13) as claimed in claim 2, **characterized in that** the cover (49) is filled for between 50 and 95 percent, preferably for between 60 and 90 percent, and more preferably for between 70 and 85 percent with said particulate or granular material (40).

4. Neck supporting means (13) as claimed in any one of claims 1 to 3, **characterized in that** the pillow body (14) extends in front of the head support (4) and is formed as one integral part (41) with the head support.

5. Vehicle seat (1) provided with a seat part (2), a seat back (3), a head support (4), and means (13) arranged between the seat back (3) and the head support (4) for supporting the neck (19) of a user, the neck supporting means (13) comprising at least one pillow body (14) protruding forward at least partially from a principal plane defined by the seat back (3) and the head support (4), **characterized in that** the pillow body (14) is plastically deformable upon impact due to a rearwardly directed acceleration, and is connected to a form-retaining carrier (22).

6. Seat (1) as claimed in claim 5, **characterized in that** the pillow body (14) comprises at least one cover (49) filled at least partially with a particulate or granular material (40).

7. Seat (1) as claimed in claim 6, **characterized in that** the cover (49) is filled for between 50 and 95 percent with said particulate or granular material (40).

8. Seat (1) as claimed in claim 7, **characterized in that** the cover (49) is filled for between 60 and 90 percent, and preferably for between 70 and 85 percent with said particulate or granular material (40).

9. Seat (1) as claimed in any one of claims 5 to 8, **characterized in that** the pillow body (14) is height-adjustable relative to the seat part (2).

10. Seat (1) as claimed in any one of claims 5 to 9, **characterized in that** the pillow body (14) extends in front of the head support (4).

11. Seat (1) as claimed in claim 10, **characterized in that** the pillow body (14) is formed as one integral part (41) with the head support.

12. Seat (1) as claimed in any one of claims 5 to 11, **characterized in that** the seat back (3) is connected to the seat part (2) such that it is displacable in the direction of movement of the vehicle.

## Patentansprüche

1. Nackenstützeinrichtung (13) eines Fahrzeugsitzes, der mit einem Sitzteil (2), einer Rückenlehne (3) und einer Kopfstütze (4) ausgestattet ist, wobei diese Einrichtung (13) mindestens einen Kissenkörper (14) umfaßt, der von der Hauptebene, in der die Rückenlehne (3) und die Kopfstütze (4) des Fahrzeugsitzes liegen, zumindest zum Teil nach vorn ragt,
dadurch gekennzeichnet,
daß der Kissenkörper (14) bei einem durch eine Rückwärtsbeschleunigung bewirkten Stoß plastisch verformt wird und mit einem formgebenden Träger (22) verbunden ist.

2. Nackenstützeinrichtung (13) nach Anspruch 1, dadurch gekennzeichnet, daß der Kissenkörper (14) mindestens eine Hülle (49) umfaßt, die zumindest zum Teil mit einem Partikel- oder Granulatmaterial (40) gefüllt ist.

3. Nackenstützeinrichtung (13) nach Anspruch 2, dadurch gekennzeichnet, daß die Hülle (49) zu 50 bis 95 Prozent, vorzugsweise zu 60 bis 90 Prozent, besonders bevorzugt zu 70 bis 85 Prozent, mit dem Partikel- oder Granulatmaterial (40) gefüllt ist.

4. Nackenstützeinrichtung (13) nach einem der Ansprüche 1 bis 3, dadurch gekennzeichnet, daß der Kissenkörper (14) vor der Kopfstütze (4) angeordnet ist und in einem Stück (41) mit der Kopfstütze gebildet ist.

5. Fahrzeugsitz (1), der mit einem Sitzteil (2), einer Rückenlehne (3), einer Kopfstütze (4) und einer zwischen der Rückenlehne (3) und der Kopfstütze (4) angeordneten Einrichtung (13) zum Stützen des Nackens eines Benutzers ausgestattet ist, die mindestens einen Kissenkörper (14) umfaßt, der von der Hauptebene, in der die Rückenlehne (3) und die Kopfstütze (4) liegen, zumindest zum Teil nach vorn ragt,
dadurch gekennzeichnet,
daß der Kissenkörper (14) bei einem durch eine Rückwärtsbeschleunigung bewirkten Stoß plastisch verformt wird und mit einem formgebenden Träger (22) verbunden ist.

6. Sitz (1) nach Anspruch 5, dadurch gekennzeichnet, daß der Kissenkörper (14) mindestens eine Hülle (49) umfaßt, die zumindest zum Teil mit einem Partikel- oder Granulatmaterial (40) gefüllt ist.

7. Sitz (1) nach Anspruch 6, dadurch gekennzeichnet, daß die Hülle (49) zu 50 bis 95 Prozent mit dem Partikel- oder Granulatmaterial (40) gefüllt ist.

8. Sitz (1) nach Anspruch 7, dadurch gekennzeichnet, daß die Hülle (49) zu 60 bis 90 Prozent, vorzugsweise aber zu 70 bis 85 Prozent, mit dem Partikel- oder Granulatmaterial (40) gefüllt ist.

9. Sitz (1) nach einem der Ansprüche 5 bis 8, dadurch gekennzeichnet, daß der Kissenkörper (14) in bezug auf das Sitzteil (2) höhenverstellbar ist.

10. Sitz (1) nach einem der Ansprüche 5 bis 9, dadurch gekennzeichnet, daß der Kissenkörper (14) vor der Kopfstütze (4) angeordnet ist.

11. Sitz (1) nach Anspruch 10, dadurch gekennzeichnet, daß der Kissenkörper (14) in einem Stück (41) mit der Kopfstütze gebildet ist.

12. Sitz (1) nach einem der Ansprüche 5 bis 11, dadurch gekennzeichnet, daß die Rückenlehne (3) so mit dem Sitzteil (2) verbunden ist, daß sie in Fahrtrichtung des Fahrzeugs verschiebbar ist.

## Revendications

1. Moyens de support de cou (13) d'un siège de véhicule muni (1) d'une partie d'assise (2), d'un dossier (3) et d'un appui-tête (4), lesdits moyens (13) comportant au moins un corps de coussin (14) faisant saillie vers l'avant au moins partiellement à partir d'un plan principal défini par le dossier (3) et l'appui-tête (4) du siège de véhicule, caractérisés en ce que le corps de coussin est déformable plastiquement lors d'un impact dû à une accélération dirigée vers l'arrière et est relié à un support de maintien de forme (22).

2. Moyens de support de cou (13) selon la revendication 1, caractérisés en ce que le corps de coussin (14) comporte au moins une enveloppe (49) remplie au moins partiellement d'un matériau particulaire ou granulaire (40).

3. Moyens de support de cou (13) selon la revendication 2, caractérisés en ce que l'enveloppe (49) est remplie entre 50 et 95 pour-cent, de préférence entre 60 et 90 pour-cent, et de manière plus préférée entre 70 et 85 pour-cent dudit matériau particulaire ou granulaire (40).

4. Moyens de support de cou (13) selon l'une quelconque des revendications 1 à 3, caractérisés en ce que le corps de coussin (14) s'étend en avant de l'appui-tête (4) et est formé en une partie (41) en un seul bloc avec l'appui-tête.

5. Siège de véhicule (1) muni d'une partie d'assise (2) d'un dossier (3) d'un appui-tête (4), et de moyens (13) agencés entre le dossier (3) et l'appui-tête (4) pour supporter le cou (19) d'un utilisateur, les moyens de support de cou (13) comportant au moins un corps de coussin (14) faisant saillie vers l'avant au moins partiellement à partir, d'un plan principal défini par le dossier (3) et l'appui-tête (4), caractérisé en ce que le corps de coussin (14) est déformable plastiquement lors d'un impact dû à une accélération dirigée vers l'arrière, et est relié à un support de maintien de forme (22).

6. Siège (1) selon la revendication 5, caractérisé en ce que le corps de coussin (14) comporte au moins une enveloppe (49) remplie au moins partiellement d'un matériau particulaire ou granulaire (40).

7. Siège (1) selon la revendication 6, caractérisé en ce que l'enveloppe (49) est remplie entre 50 et 95 pour-cent dudit matériau particulaire ou granulaire (40).

8. Siège (1) selon la revendication 7, caractérisé en ce que l'enveloppe (49) est remplie entre 60 et 90 pour-cent et de préférence entre 70 et 85 pour-cent dudit matériau particulaire ou granulaire (40).

9. Siège (1) selon l'une quelconque des revendications 5 à 8, caractérisé en ce que le corps de coussin (14) est réglable en hauteur par rapport à l'assise (2).

10. Siège (1) selon l'une quelconque des revendications 5 à 9, caractérisé en ce que le corps de coussin (14) s'étend en avant de l'appui-tête (4).

11. Siège (1) selon la revendication 10, caractérisé en ce que le corps de coussin (14) est formé en tant que partie (41) en un seul bloc avec l'appui-tête.

12. Siège (1) selon l'une quelconque des revendications 5 à 11, caractérisé en ce que le dossier (3) est relié à la partie d'assise (2) de telle sorte qu'il peut être déplacé dans la direction de déplacement du véhicule.
